# FASCICULE DE BREVET EUROPEEN

(11) **EP 2 958 771 B1**
(45) Date de publication et mention de la délivrance du brevet: **29.03.2017**
(21) Numéro de dépôt: 13805454.9
(22) Date de dépôt: 05.11.2013
(51) Int. Cl.: B60P 1/64, B60P 3/14

(54) **VEHICULE UTILITAIRE AVEC CARROSSERIE MODULAIRE**
NUTZFAHRZEUG MIT MODULAREM AUFBAU
COMMERCIAL VEHICLE HAVING A MODULAR BODY

(30) Priorité: 20.02.2013 FR 1351458
(43) Date de publication de la demande: 30.12.2015
(73) Titulaire: SH2M, 38230 Pont de Cheruy (FR)
(72) Inventeur: MILLET, Pierre, 38110 La Chapelle de la Tour (FR)
(74) Mandataire: Thibault, Jean-Marc
(86) Numéro de dépôt international: PCT/FR2013/052635
(87) Numéro de publication internationale: WO 2014/128363

(56) Documents cités:
- DE-U1- 29 811 150
- GB-A- 2 110 171

## Description

La présente invention concerne le domaine technique des véhicules utilitaires au sens général et elle vise plus particulièrement un véhicule utilitaire comportant une cabine et une carrosserie amovible.

Dans le domaine technique de l'invention, il est connu par le brevet GB 2 110 171, un véhicule utilitaire comportant une cabine et un châssis de réception d'une caisse ou d'une carrosserie formant un fourgon monté de manière amovible sur le châssis. A cet effet, le châssis est muni de deux traverses ouvertes sur le dessus pour former des sièges de réception pour des profilés de forme complémentaire fixés sous le fond du fourgon. Les profilés délimitent un passage pour les fourches d'un chariot élévateur destinées à venir en appui sur le fond du fourgon lors des opérations de retrait ou de mise en place du fourgon sur le châssis. Des tenons s'étendent en saillie à partir des traverses afin de coopérer avec des lumières aménagées dans les profilés pour empêcher les mouvements du fourgon par rapport au châssis. L'assemblage du fourgon sur le châssis peut être complété à l'aide de liens fixés aux extrémités des traverses.

Une telle solution offre l'avantage de pouvoir facilement positionner ou retirer, du châssis d'un véhicule utilitaire, un fourgon à l'aide d'un chariot élévateur largement répandu dans les entreprises où un tel véhicule est utilisé.

Toutefois, le montage du fourgon sur le châssis ne présente pas toutes les garanties de sécurité. En effet, aucun verrouillage mécanique n'intervient entre le châssis et le fourgon. Par ailleurs, la technique de mise en place de liens de fixation est une solution pis-aller nécessitant une intervention manuelle et, qui par ailleurs, ne permet pas de garantir une fixation sûre et efficace du fourgon sur le châssis.

Il doit être constaté, par ailleurs, qu'un tel fourgon peut être retiré facilement du véhicule par une personne mal intentionnée et équipée d'un chariot élévateur.

De façon complémentaire, les moyens techniques assurant les montages entre le fourgon et le châssis s'avèrent en pratique spécifiquement adaptés pour un modèle particulier de fourgon limitant les applications d'un tel véhicule utilitaire.

Un autre véhicule du domaine technique de l'invention est connu par le brevet DE 298 11 150U.

L'objet de l'invention vise donc à remédier aux inconvénients de l'état de la technique en proposant un nouveau véhicule utilitaire adapté pour permettre le montage facile et sûre d'une carrosserie amovible sur le châssis d'un tel véhicule.

Un autre objet de l'invention est de proposer un véhicule utilitaire conçu pour permettre l'adaptation simple, rapide et sûre de différents modèles de carrosseries pour réaliser différentes fonctionnalités.

Pour atteindre de tels objectifs, le véhicule selon l'invention comporte un châssis délimitant une cabine et une plateforme de réception et une carrosserie amovible présentant, une partie avant, une partie arrière, deux parties latérales et un fond possédant deux surfaces d'appui pour des fourches d'un engin de manutention, s'étendant parallèlement entre elles en délimitant en partie, deux passages de fourches, le véhicule comportant un dispositif d'assemblage temporaire entre le châssis et la carrosserie.

Selon l'invention :
- la carrosserie comporte deux passages de fourches débouchant sur la partie arrière de la carrosserie,
- le dispositif d'assemblage temporaire comporte :
   - pour chaque passage de fourche, un levier de verrouillage monté pivotant sur le châssis et commandé dans un sens pour occuper une position escamotée libérant l'assemblage entre la carrosserie et le châssis et commandé dans un sens contraire, pour occuper une position d'assemblage de la carrosserie avec le châssis,
   - un système de verrouillage entre la carrosserie et le châssis, comportant une commande à accès sécurisé.

De plus, le véhicule selon l'invention peut présenter en outre en combinaison au moins l'une et/ou l'autre des caractéristiques additionnelles suivantes :
- la carrosserie est aménagée pour former une citerne, un fourgon isotherme ou non, un plateau à ridelles ou non, un plateau benne,
- les leviers de verrouillage s'étendent en saillie à l'intérieur des passages de fourches de manière à être commandés, à l'aide des fourches, en pivotement pour occuper la position escamotée, les leviers étant sollicités élastiquement pour occuper en l'absence des fourches, une position d'assemblage de la carrosserie avec le châssis,
- la commande à accès sécurisé du système de verrouillage est située à l'intérieur de la cabine,
- la commande du système de verrouillage pilote le déplacement d'un coulisseau assurant le blocage en soulèvement de la carrosserie,
- le coulisseau agit sur une butée de la carrosserie s'étendant sensiblement au milieu de la partie avant de la carrosserie,
- chaque levier de verrouillage comporte un crochet coopérant, en position de repos, avec une tige horizontale portée par le fond de la carrosserie,
- chaque crochet se trouve prolongé en direction de la partie terminale du levier, par une rampe inclinée d'actionnement,
- chaque levier est équipé d'un nez d'effacement, monté pivotant sur le levier et rappelé élastiquement en direction de la partie avant de la carrosserie,
- la carrosserie est équipée sur sa partie arrière, de trappes de fermeture des passages de fourche.

Un autre objet de l'invention est un équipement modulaire de transport, comportant :
- un véhicule conforme à l'invention,
- au moins une carrosserie amovible de rechange adaptée pour être montée sur le châssis du véhicule et présentant une partie avant équipée dans son milieu, d'une butée de coopération avec le système de verrouillage du véhicule, une partie arrière dans laquelle débouche deux passages de fourches, deux parties latérales, un fond présentant deux surfaces d'appui pour des fourches s'étendant parallèlement entre-elles en délimitant en partie les deux passages de fourches équipées chacun d'une tige horizontale coopérant avec un levier de verrouillage, la carrosserie amovible de rechange et la carrosserie amovible équipant le véhicule étant des modèles différents pris parmi une citerne, un fourgon isotherme ou non, un plateau à ridelles ou non, un plateau benne,
- un engin de manutention à deux fourches, piloté pour enlever du véhicule la carrosserie amovible et la remplacer par une carrosserie amovible de rechange.

Diverses autres caractéristiques ressortent de la description faite ci-dessous aux dessins annexés qui montrent, à titre d'exemples non limitatifs, des formes de réalisation de l'objet de l'invention.
La **Figure 1** est une vue en perspective d'un exemple de réalisation d'un véhicule utilitaire conforme à l'invention.
Les **Figures 1A** et **1B** sont des vues d'un exemple de réalisation d'une cabine amovible destinée à équiper un véhicule utilitaire selon l'invention, de type plateau à ridelles basculant en position respectivement de repos et basculée.
La **Figure 2** est une vue illustrant le principe du véhicule utilitaire en cours d'équipement par une carrosserie amovible.
La **Figure 3** est une vue en perspective partielle illustrant un exemple de réalisation d'un système avant de verrouillage entre la carrosserie et le châssis comportant une commande à accès sécurisé.
Les **Figures 4 et 5** sont des vues d'un levier de verrouillage conforme à l'invention en position respectivement d'assemblage et d'escamotage.
Les **Figures 6 et 7** sont des vues de détail illustrant le système avant de verrouillage entre la carrosserie amovible et le châssis en position respectivement verrouillée et déverrouillée.
La **Figure 8** est une vue de détail d'un levier de verrouillage équipé d'un système d'effacement pour des traverses portées par des fourches.
La **Figure 9** illustre un autre exemple de réalisation d'un système avant de verrouillage ente la carrosserie et le châssis.

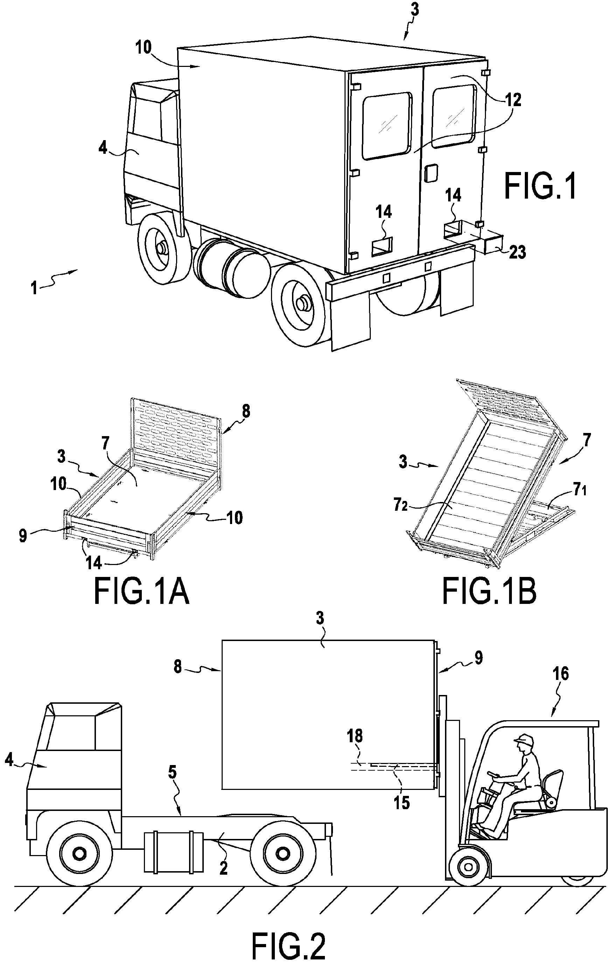

Tel que cela ressort des **Fig. 1 et 2****,** l'objet de l'invention concerne un véhicule utilitaire **1** comprenant un châssis **2** et au moins une caisse ou une carrosserie amovible **3.** Le châssis **2** est adapté pour délimiter une cabine de conduite **4** et une plateforme **5** de chargement ou de réception pour la carrosserie amovible **3.** Le véhicule **1** qui par exemple est du type à cabine avancée, comporte une motorisation de tous types et de préférence électrique ainsi que des organes de roulement en nombre adapté au gabarit du véhicule.

Conformément à une caractéristique avantageuse de réalisation, le véhicule utilitaire **1** est adapté pour recevoir des carrosseries amovibles **3** relevant de modèles différents. Ainsi, l'objet de l'invention vise un équipement modulaire de transport comportant un véhicule utilitaire **1** équipé d'une carrosserie amovible **3** relevant d'un modèle donné et au-moins une carrosserie amovible dite de rechange relevant d'un modèle de préférence différent de la carrosserie équipant le véhicule. A titre d'exemple, les carrosseries amovibles **3** susceptibles d'équiper le véhicule utilitaire **1** sont des modèles pris parmi une citerne, un fourgon isotherme ou non, un fourgon à parois pleines ou à rideau à lamelles, un plateau à ridelles ou non, fixe ou basculant, un plateau benne, un équipement de carrosserie bâché ou grillagé, etc. Dans l'exemple illustré à la **Fig. 1****,** la carrosserie amovible **3** est un fourgon alors que dans l'exemple illustré aux **Fig. 1A** et **1B**, la carrosserie amovible est un plateau à ridelles basculant.

Quel que soit le modèle, la carrosserie amovible **3** comporte un fond **7** présentant une forme rectangulaire correspondant à la forme de la plateforme de réception **5**. D'une manière générale, chaque carrosserie amovible **3** possède une partie avant **8,** une partie arrière **9** et deux parties latérales **10**. Bien entendu, les différentes parties de la carrosserie **1** sont réalisées en fonction du modèle réalisé. Dans l'exemple illustré à la **Fig. 1**, la carrosserie amovible **3** est un fourgon de sorte que les parties latérales **10**, la partie avant **8** et la partie arrière **9** sont réalisées par des parois pleines raccordées à leur sommet par un toit. Des portes **12** sont aménagées dans la partie arrière **9** pour accéder au volume interne du fourgon. Il est à noter que le fond **7** est pourvu de traverses et/ou de longerons adaptés pour venir en appui sur des zones déterminées de la plateforme **5** du châssis **2.** Dans l'exemple illustré aux **Fig. 1A**, **1B**, le fond **7** est pourvu d'un châssis fixe **7₁** destiné à venir en appui sur la plateforme **5** et un plateau à ridelles **7₂** monté basculant sur le châssis **7₁**.

Selon une caractéristique de l'invention, la partie arrière **9** de la carrosserie **3** comporte deux ouvertures **14** pour le passage de fourches **15** d'un engin de manutention **16** tel qu'un chariot élévateur par exemple. Les ouvertures **14** communiquent avec des passages **18** pour les fourches **15**, délimités en partie par des surfaces d'appui **7₁**, présentées par le fond **7** de la carrosserie. Les deux passages **18** s'étendent parallèlement entre eux selon la direction longitudinale de la carrosserie amovible **3.** Il est à noter que la distance entre les deux passages **18** correspond à la distance séparant les deux fourches **15** de l'engin de manutention **16** ou aux deux rallonges de fourche rapportées sur les fourches de l'engin de manutention. Ces deux fourches **15** sont adaptées pour venir en contact avec les surfaces d'appui **7₁** de la carrosserie amovible **3.** A cet égard, le fond **7** est aménagé pour présenter localement ou, sur toute la longueur des passages **18,** une surface d'appui **7₁** pour les fourches. Bien entendu, les passages **18** sont adaptés pour recevoir différents modèles de fourches.

Selon une variante préférée de réalisation, chaque passage **18** comporte de part et d'autre, selon la direction longitudinale, des butées **21** assurant le guidage latéral des fourches **15.** Avantageusement, des butées **21** sont positionnées de part et d'autre de chaque ouverture **14** pour permettre de guider l'engagement des fourches **15** à l'intérieur des passages **18.** Ces butées **21** s'étendent de préférence, sur la majeure partie de la longueur des passages **18** qui se trouvent ainsi circonscrits à l'intérieur d'un conduit ou d'un tunnel.

Selon une caractéristique avantageuse de réalisation, la carrosserie amovible **3** est équipée, sur sa face arrière, de trappes **23** de fermeture des ouvertures **14.** Chaque trappe **23** est montée sur la carrosserie amovible **3** de manière appropriée. Par exemple, les trappes **23** sont montées de manière amovible sur la carrosserie par encliquetage.

Le véhicule utilitaire **1** selon l'invention comporte également un dispositif **30** d'assemblage déverrouillable ou temporaire de la carrosserie **3** avec le châssis **2.**

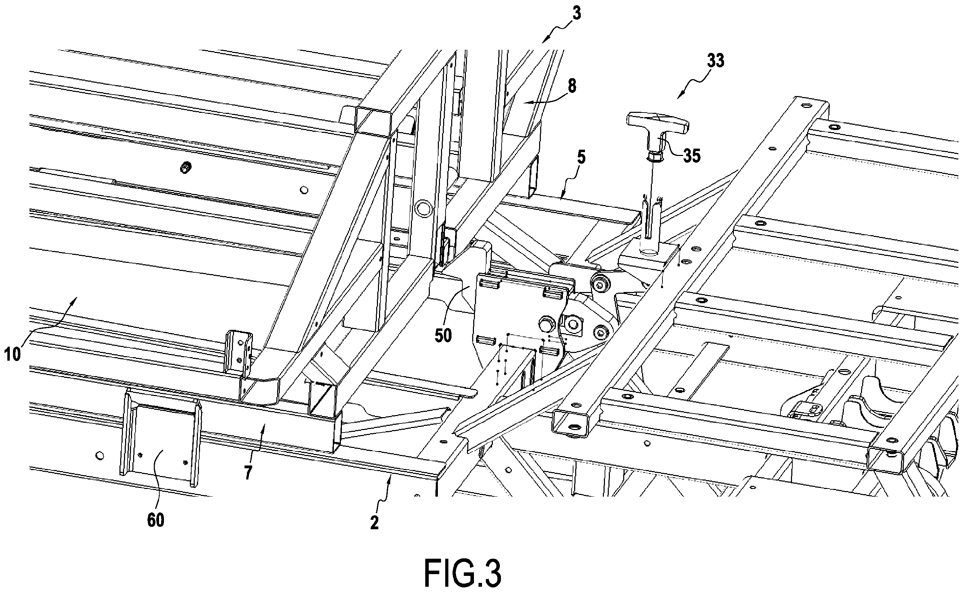

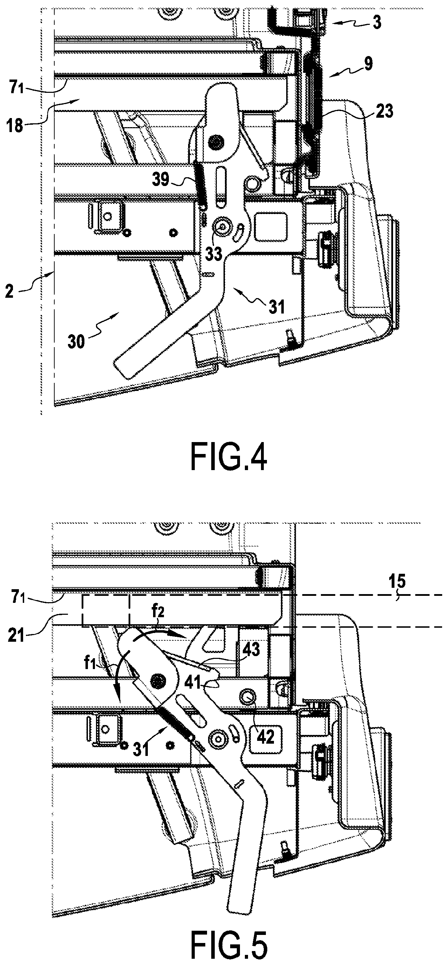

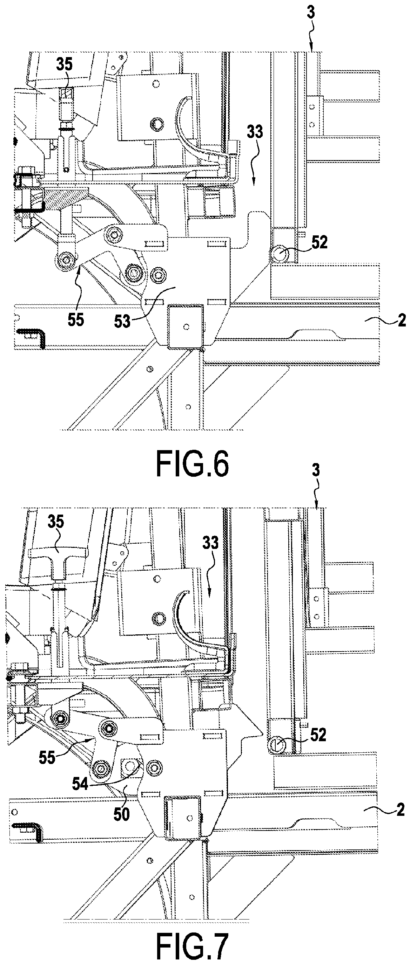

Conformément à l'invention, le dispositif d'assemblage temporaire **30** comporte :
- pour chaque passage de fourche **18,** un levier de verrouillage **31** monté pivotant sur le châssis **2** et commandé dans un premier sens **F1** pour occuper une position escamotée libérant l'assemblage entre la carrosserie amovible **3** et le châssis (**Fig. 5**) et commandé dans un deuxième sens **F2** contraire au premier sens **F1**, pour occuper une position d'assemblage de la carrosserie amovible **3** avec le châssis. **2** (**Fig. 4**),
- un système **33** de verrouillage entre la carrosserie **3** et le châssis 2 comportant une commande à accès sécurisé **35** (**Fig. 3****,** **6**).

Selon une variante préférée de réalisation, les leviers de verrouillage **31** sont commandés en pivotement à l'aide des fourches **15.** A cet effet, les leviers de verrouillage **31** s'étendent en position d'assemblage de la carrosserie avec le châssis, en saillie à l'intérieur des passages de fourches **18.** Ainsi, lors de l'engagement des fourches **15** à l'intérieur des passages de fourches **18,** les leviers de verrouillage **31** sont entraînés en pivotement dans le premier sens **F1** pour occuper leur position escamotée. Lors du retrait des fourches **15** des passages **18,** les leviers de verrouillage **31** sont sollicités élastiquement pour occuper, en l'absence des fourches **15,** une position d'assemblage de la carrosserie amovible **3** avec le châssis **2.**

Dans l'exemple illustré, chaque levier de verrouillage **31** est monté pivotant selon un axe de pivotement **33** porté par le châssis pour permettre le déplacement du levier de verrouillage **31** dans un plan sensiblement vertical. Chaque levier de verrouillage **31** est sollicité élastiquement à l'aide d'un ressort **39** pour revenir à sa position d'assemblage. Chaque levier de verrouillage **31** comporte un crochet **41** coopérant, en position de repos, avec une tige horizontale **42** porté par le fond **7** de la carrosserie **3.**

De préférence, chaque levier de verrouillage **31** comporte, entre le crochet **41** et la partie terminale, une rampe d'actionnement **43** permettant lors de l'application d'un effort vertical, le pivotement du levier de verrouillage **31** selon le premier sens **F1** pour la mise en position de la tige **42.** Il est à noter que l'extrémité de chaque levier de verrouillage **31** est décalée vers la partie avant **8,** par rapport à l'axe de pivotement **33**.

De préférence, les leviers de verrouillage **31** sont montés à proximité l'arrière du châssis **2** du véhicule utilitaire.

Le système de verrouillage **33** dit avant comporte un coulisseau **50** apte à être commandé en déplacement à l'aide de la commande **35** qui possède par exemple une position quart de tour pour sécuriser le verrouillage. Le coulisseau **50** est apte à être déplacé entre une position de blocage en soulèvement de la carrosserie (**Fig. 6**) et une position de déverrouillage de la carrosserie **3** (**Fig. 7**). Avantageusement, le coulisseau **50** est apte à venir bloquer une butée **52** s'étendant au milieu et à la base de la partie avant **8** de la carrosserie **3.** Le coulisseau **50** est monté coulissant dans un boîtier guide **53** et se trouve sollicité élastiquement par un ressort **54,** selon un sens conduisant à la sortie du coulisseau **50** par rapport au boîtier guide **53.** Le ressort **54** sollicite le coulisseau **50** en position d'appui contre la butée **52** pour assurer le verrouillage de la carrosserie amovible **3** sur le châssis **2**. Le coulisseau **50** est déplacé entre les deux positions à l'aide de la commande **35** via une transmission **55** de tous types.

Le fonctionnement de l'équipement de transport découle directement de la description qui précède.

En position de montage de la carrosserie **3** sur le véhicule, la carrosserie est verrouillée sur le châssis **2** à l'aide des deux leviers de verrouillage **31** et du système de verrouillage avant **33.** La carrosserie amovible **3** se trouve ainsi ancrée rigidement au châssis en trois points.

L'enlèvement de la carrosserie amovible **3** par rapport au châssis **2** du véhicule consiste à retirer les trappes d'accès **23** pour permettre l'introduction des fourches **15** de l'engin de manutention **16** dans les ouvertures **14.** L'engagement des fourches **15** dans les passages **18** conduit au pivotement des leviers de verrouillage **31** pour venir occuper leur position escamotée dans laquelle les tiges **42** de la carrosserie ne sont plus retenues par les crochets **41.** La commande à accès sécurisé **35** est par ailleurs déplacée pour permettre de déverrouiller la carrosserie amovible **3** par rapport au châssis. L'engin de manutention **16** est commandé pour permettre le soulèvement des fourches **15** les amenant en contact sur la surface d'appui **7₁** pour permettre le soulèvement de la carrosserie amovible **3** et son retrait du châssis **2.**

La mise en place d'une carrosserie de rechange **3** consiste à enlever les trappes de cette carrosserie pour permettre l'engagement des fourches **15** de l'engin de manutention **16** dans les ouvertures **14** afin qu'elles s'étendent dans les passages **18** en-dessous du fond **7** de la carrosserie. L'élévation des fourches **15** permet de soulever la carrosserie **3** par leur mise en appui sur la surface d'appui **7₁** du fond **7** de la carrosserie.

L'engin de manutention **16** déplace la carrosserie afin de l'amener en surplomb de la plateforme **5** du châssis **2** et la déposer sur la plateforme **5.** Le positionnement de la carrosserie de rechange est assuré par la présence de tampons ou drageoirs de positionnement **60** s'élevant de la plateforme **5** du châssis **2** et coopérant avec les parties latérales **10** du fond de la carrosserie **3.**

Dans cette position, les leviers de verrouillage **31** sont basculés et occupent leur position escamotée. Le retrait des fourches **15** des passages **18** provoquent le pivotement des leviers de verrouillage **31** selon le deuxième sens de pivotement sous l'action des ressorts **39.** Les crochets **41** viennent ainsi coopérer avec les tiges **42** du châssis pour verrouiller la carrosserie **3** sur le châssis **2**.

La commande à accès sécurisé **35** du système de verrouillage **33** est pilotée pour permettre d'amener le coulisseau **50** à coopérer avec la butée **52** de la carrosserie **3.** Ainsi, la carrosserie **3** se trouve ancrée en trois points du châssis **2.** La carrosserie **3** se trouve fixée rigidement au châssis **2** tout en ayant été manutentionnée rapidement et en toute sécurité. Un véhicule utilitaire **1** peut donc être équipé rapidement par un modèle de carrosserie différent, en fonction des besoins des utilisateurs.

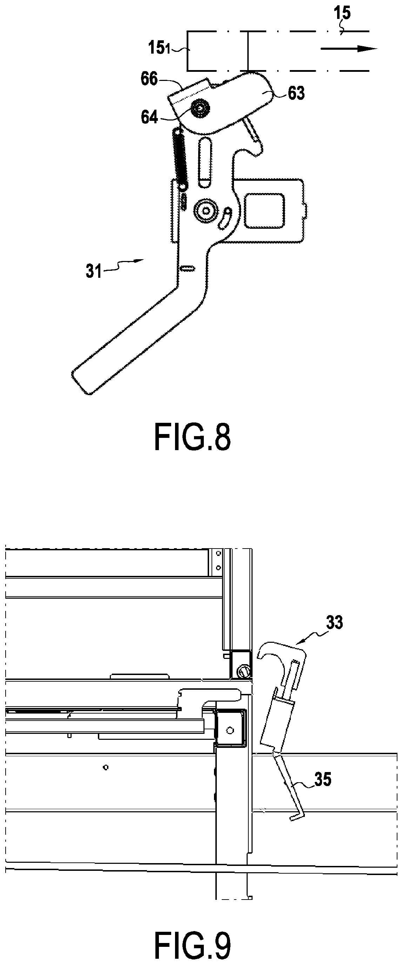

Selon une variante de réalisation, il est à noter que les fourches **15** de l'engin de manutention **16** peuvent être munies dans certains cas, de rallonges reliées à leur extrémité par une traverse **15₁** (**Fig. 8**). Dans ce cas, chaque levier de verrouillage **31** est équipé d'un nez d'effacement **63** monté pivotant sur le levier **31** selon un axe de pivotement **64** et rappelé élastiquement à l'aide d'un ressort **65**, en direction de la partie avant **8** de la carrosserie **3.** Ce nez d'effacement **63** s'étend ainsi à l'extrémité libre de chaque levier de verrouillage **31.**

Ce nez d'effacement **63** est apte à être pivoté sous l'action de la traverse **15₁** des fourches **15,** lors du retrait des fourches **15.** Le pivotement du nez d'effacement **63** autorise ainsi le retrait des fourches de passage **18.** Après le retrait des fourches **15**, le nez d'effacement **63** est sollicité par le ressort **65** pour revenir à sa position de repos délimitée par une butée **66** venant en contact avec le levier **31.**

Dans l'exemple illustré, l'enlèvement mal intentionné de la carrosserie **3** du véhicule est empêché par le montage de la commande **35** à l'intérieur de la cabine **4** dont l'accès est autorisé à la personne munie généralement d'une clé voire d'un badge. Bien entendu, la sécurisation du système de verrouillage **33** peut être augmentée en équipant directement la commande **35** du système de verrouillage **33** à l'aide d'un dispositif de blocage à code, à clé ou à badge par exemple. Il est à noter qu'un te! dispositif de blocage peut équiper le système de verrouillage **33** dont la commande est placée en dehors de la cabine de conduite **4** comme illustré à la Figure 9. Dans ce cas, il peut peut-être être prévu que la commande **35** se trouve située en dehors de la cabine **4** en étant équipée d'un tel dispositif de blocage à accès sécurisé.

Dans la description qui précède, le dispositif d'assemblage temporaire **30** comporte deux leviers de verrouillage **31**. Il est clair qu'il peut être envisagé de positionner un nombre supérieur de leviers d'assemblage **31** au niveau des passages de fourches **18**.

Selon une autre variante de réalisation, il est à noter qu'il peut être envisagé de commander le fonctionnement des leviers de verrouillage **31**, non pas à l'aide des fourches **15** d'un engin de manutention **16**, mais à l'aide d'un système motorisé, par exemple une commande externe actionnée par un opérateur.

L'invention n'est pas limitée aux exemples décrits et représentés car diverses modification peuvent y être apportées sans sortir de son cadre.

## Revendications

1. Véhicule comportant un châssis (**2**) délimitant une cabine (**4**) et une plateforme (**5**) de réception et une carrosserie amovible (**3**) présentant, une partie avant (**8**), une partie arrière (**9**), deux parties latérales (**10**) et un fond (**7**) possédant deux surfaces d'appui (**7₁**) pour des fourches d'un engin de manutention (**16**), s'étendant parallèlement entre elles en délimitant en partie, deux passages de fourches (**18**), le véhicule comportant un dispositif d'assemblage temporaire (**30**) entre le châssis (**2**) et la carrosserie (**3**), **caractérisé en ce que** :
- la carrosserie (**3**) comporte deux passages de fourches (**18**) débouchant sur la partie arrière (**9**) de la carrosserie (**3**),
- le dispositif d'assemblage temporaire (**30**) comporte :
• pour chaque passage de fourche (**18**), un levier de verrouillage (**31**) monté pivotant sur le châssis (**2**) et commandé dans un sens pour occuper une position escamotée libérant l'assemblage entre la carrosserie et le châssis et commandé dans un sens contraire, pour occuper une position d'assemblage de la carrosserie (**3**) avec le châssis (**2**),
• un système de verrouillage (**33**) entre la carrosserie (**3**) et le châssis (**2**), comportant une commande à accès sécurisé (**35**).

2. Véhicule selon la revendication 1, **caractérisé en ce que** la carrosserie (**3**) est aménagée pour former une citerne, un fourgon isotherme ou non, un plateau à ridelles ou non, un plateau benne.

3. Véhicule selon la revendication 1, **caractérisé en ce que** les leviers de verrouillage (**31**) s'étendent en saillie à antérieur des passages de fourches (**18**) de manière à être commandés, à l'aide des fourches (**15**), en pivotement pour occuper la position escamotée, les leviers étant sollicités élastiquement pour occuper en l'absence des fourches (**15**), une position d'assemblage de la carrosserie avec le châssis.

4. Véhicule selon la revendication 1, **caractérisé en ce que** la commande à accès sécurisé (**35**) du système de verrouillage (**33**) est située à l'intérieur de la cabine (**4**).

5. Véhicule selon la revendication 4, **caractérisé en ce que** la commande (**35**) du système de verrouillage (**31**) pilote le déplacement d'un coulisseau (**50**) assurant le blocage en soulèvement de la carrosserie.

6. Véhicule selon la revendication 5, **caractérisé en ce que** le coulisseau (**50**) agit sur une butée (**52**) de la carrosserie s'étendant sensiblement au milieu de la partie avant (**8**) de la carrosserie (**3**).

7. Véhicule selon la revendication 1, **caractérisé en ce que** chaque levier de verrouillage (**31**) comporte un crochet (**41**) coopérant, en position de repos, avec une tige horizontale (**42**) portée par le fond (**7**) de la carrosserie (**3**).

8. Véhicule selon la revendication 7, **caractérisé en ce que** chaque crochet (**41**) se trouve prolongé en direction de la partie terminale du levier, par une rampe inclinée d'actionnement (**43**).

9. Véhicule selon les revendications 7 ou 8, **caractérisé en ce que** chaque levier (**31**) est équipé d'un nez d'effacement (**63**), monté pivotant sur le levier et rappelé élastiquement en direction de la partie avant de la carrosserie.

10. Véhicule selon l'une des revendications 1 à 9, **caractérisé en ce que** la carrosserie (**3**) est équipée sur sa partie arrière (**9**), de trappes (**23**) de fermeture des passages de fourche (**18**).

11. Equipement modulaire de transport, **caractérisé en ce qu'**il comporte :
- un véhicule (**1**) conforme à l'une des revendications 1 à 10,
- au moins une carrosserie amovible de rechange (**3**) adaptée pour être montée sur le châssis (**2**) du véhicule et présentant une partie avant (**8**) équipée dans son milieu, d'une butée (**52**) de coopération avec le système de verrouillage (**33**) du véhicule, une partie arrière (**9**) dans laquelle débouche deux passages de fourches (**18**), deux parties latérales (**10**), un fond (**7**) présentant deux surfaces d'appui (**7₁**) pour des fourches (**15**) s'étendant parallèlement entre-elles en délimitant en partie les deux passages de fourches équipées chacun d'une tige horizontale (**42**) coopérant avec un levier de verrouillage (**31**), la carrosserie amovible de rechange (**3**) et la carrosserie amovible (**3**) équipant le véhicule (**1**) étant des modèles différents pris parmi une citerne, un fourgon isotherme ou non, un plateau à ridelles ou non, un plateau benne,
- un engin de manutention (**16**) à deux fourches (**15**), piloté pour enlever du véhicule (**1**) la carrosserie amovible et la remplacer par une carrosserie amovible de rechange.

## Patentansprüche

1. Fahrzeug, das ein Chassis (**2**) umfasst, das eine Kabine (**4**) und eine Aufnahmeplattform (**5**) abgrenzt, sowie eine abnehmbare Karosserie (**3**), die einen Vorderteil (**8**), einen hinteren Teil (**9**), zwei seitliche Teile (**10**) aufweist, und einen Boden (**7**), der zwei Auflageoberflächen (**7₁**) für Gabeln eines Förderzeugs (**16**) besitzt, die sich parallel zueinander erstrecken, wobei sie zum Teil zwei Gabeldurchgänge (**18**) abgrenzen, wobei das Fahrzeug eine Vorrichtung zum zeitweiligen Zusammenfügen (**30**) zwischen dem Chassis (**2**) und der Karosserie (**3**) umfasst, **dadurch gekennzeichnet, dass**:
- die Karosserie (**3**) zwei Gabeldurchgänge (**18**) umfasst, die auf dem hinteren Teil (**9**) der Karosserie (**3**) münden,
- wobei die Vorrichtung zum zeitweiligen Zusammenfügen (**30**) umfasst
• für jede Gabelpassage (**18**) einen Verriegelungshebel (**31**), der auf dem Chassis (**2**) schwenkend montiert ist und in eine Richtung gesteuert wird, um eine eingezogene Position zu belegen, die das Zusammenfügen zwischen der Karosserie und dem Chassis freigibt, und in eine entgegengesetzte Richtung gesteuert wird, um eine Position zum Zusammenfügen der Karosserie (**3**) mit dem Chassis (**2**) einzunehmen,
• ein Verriegelungssystem (**33**) zwischen der Karosserie (**3**) und dem Chassis (**2**), das eine Steuerung mit abgesichertem Zugang (**35**) umfasst.

2. Fahrzeug nach Anspruch 1, **dadurch gekennzeichnet, dass** die Karosserie (**3**) eingerichtet ist, um einen Tank, einen Kasten, der isotherm ist oder nicht, eine Plattform mit Pritschenwänden oder nicht, eine Kübelplattform zu bilden.

3. Fahrzeug nach Anspruch 1, **dadurch gekennzeichnet, dass** sich die Verriegelungshebel (**31**) in das Innere der Gabeldurchgänge (**18**) vorstehend derart erstrecken, dass sie mit Hilfe der Gabeln (**15**) schwenkend gesteuert werden, um die eingezogene Position einzunehmen, wobei die Hebel elastisch beansprucht werden, um bei Fehlen der Gabeln (**15**) eine Position zum Zusammenfügen der Karosserie mit dem Chassis zu belegen.

4. Fahrzeug nach Anspruch 1, **dadurch gekennzeichnet, dass** die Steuervorrichtung mit gesichertem Zugang (**35**) des Verriegelungssystems (**33**) im Inneren der Kabine (**4**) liegt.

5. Fahrzeug nach Anspruch 4, **dadurch gekennzeichnet, dass** die Steuervorrichtung (**35**) des Verriegelungssystems (**31**) die Bewegung eines Stößels (**50**) steuert, der das Blockieren unter Heben der Karosserie sicherstellt.

6. Fahrzeug nach Anspruch 5, **dadurch gekennzeichnet, dass** der Stößel (**50**) auf einen Anschlag (**52**) der Karosserie, der sich im Wesentlichen in der Mitte des Vorderteils (**8**) der Karosserie (**3**) erstreckt, einwirkt.

7. Fahrzeug nach Anspruch 1, **dadurch gekennzeichnet, dass** jeder Verriegelungshebel (**31**) einen Haken (**41**) umfasst, der in Ruheposition mit einem horizontalen Schaft (**42**), der von dem Boden (**7**) der Karosserie (**3**) getragen wird, zusammenwirkt.

8. Fahrzeug nach Anspruch 7, **dadurch gekennzeichnet, dass** jeder Haken (**41**) in Richtung des Endteils des Hebels von einer schrägen Betätigungsrampe (**34**) verlängert ist.

9. Fahrzeug nach den Ansprüchen 7 oder 8, **dadurch gekennzeichnet, dass** jeder Hebel (**31**) mit einer Versenkungsnase (**63**) ausgestattet ist, die schwenkend auf dem Hebel montiert ist und elastisch in Richtung des Vorderteils der Karosserie zurückgestellt wird.

10. Fahrzeug nach einem der Ansprüche 1 bis 9, **dadurch gekennzeichnet, dass** die Karosserie (**3**) auf ihrem hinteren Teil (**9**) mit Klappen (**23**) zum Verschließen der Gabeldurchgänge (**18**) ausgestattet ist.

11. Modulare Transportausstattung, **dadurch gekennzeichnet, dass** sie umfasst:
- ein Fahrzeug (**1**) nach einem der Ansprüche 1 bis 10,
- mindestens eine abnehmbare Ersatzkarosserie (**3**), die angepasst ist, um auf das Chassis (**2**) des Fahrzeugs montiert zu werden, und einen Vorderteil (**8**) aufweist, der in seiner Mitte mit einem Anschlag (**52**) zum Zusammenarbeiten mit dem Verriegelungssystem (**33**) des Fahrzeugs ausgestattet ist, einen hinteren Teil (**9**), in welchen zwei Gabelpassagen (**18**) münden, zwei seitliche Teile (**10**) einen Boden (**7**), der zwei Auflageflächen (**7₁**) für Gabeln (**15**) aufweist, die sich zueinander parallel erstrecken, wobei sie zum Teil die zwei Gabelpassagen zwischeneinander abgrenzen, die jeweils mit einem horizontalen Schaft (**20**) ausgestattet sind, der mit einem Verriegelungshebel (**31**) zusammenarbeitet, wobei die abnehmbare Ersatzkarosserie (**3**) und die abnehmbare Karosserie (**3**), die das Fahrzeug (**1**) ausstatten, unterschiedliche Modelle sind, die aus einem Tank, einem Kasten, der isotherm ist oder nicht, einer Plattform mit Pritschenwänden oder nicht, einer Kübelplattform genommen werden,
- ein Fördergerät (**16**) mit zwei Gabeln (**15**), das gesteuert ist, um von dem Fahrzeug (**1**) die abnehmbare Karosserie zu entfernen und sie durch eine abnehmbare Ersatzkarosserie zu ersetzen.

## Claims

1. A vehicle comprising a chassis (**2**) defining a cabin (**4**) and a receiving platform (**5**) and a removable body (**3**) having a front part (**8**), a rear part (**9**), two side parts (**10**) and a bottom (**7**) having two bearing surfaces (**7₁**) for the forks of a handling device (**16**), extending mutually parallel and partly defining two forklift pockets (**18**), the vehicle comprising a temporary assembly device (**30**) between the chassis (**2**) and the body (**3**), **characterized in that**:
- the body (**3**) comprises two forklift pockets (**18**) leading to the rear part (**9**) of the body (**3**),
- the temporary assembly device (**30**) comprises:
• for each forklift pocket (**18**), a locking lever (**31**) pivotably mounted on the chassis (**2**) and operated in one direction to occupy a retracted position releasing the assembly between the body and the chassis and operated in an opposite direction, to occupy a position of assembly of the body (**3**) with the chassis (**2**),
• a locking system (**33**) between the body (**3**) and the chassis (**2**), comprising a control with secure access (**35**).

2. The vehicle according to claim 1, **characterized in that** the body (**3**) is laid out to form a tank, an insulated or uninsulated van, a flatbed with or without drop sides, or a tipper bed.

3. The vehicle according to claim 1, **characterized in that** the locking levers (**31**) extend in protrusion inside the forklift pockets (**18**) in such a way as to be controllable, using the forks (**15**), to pivot to occupy the retracted position, the levers being elastically stressed to occupy in the absence of the forks (**15**), a position of assembly of the body with the chassis.

4. The vehicle according to claim 1, **characterized in that** the control with secure access (**35**) of the locking system (**33**) is located inside the cabin (**4**).

5. The vehicle according to claim 4, **characterized in that** the control (**35**) of the locking system (**31**) controls the movement of a slide (**50**) ensuring the body is blocked in the lifted position.

6. The vehicle according to claim 5, **characterized in that** the slide (**50**) acts on an end stop (**52**) of the body extending substantially in the middle of the front part (**8**) of the body (**3**).

7. The vehicle according to claim 1, **characterized in that** each locking lever (**31**) comprises a hook (**41**) co-operating, in the rest position, with a horizontal rod (**42**) carried by the bottom (**7**) of the body (**3**).

8. The vehicle according to claim 7, **characterized in that** each hook (**41**) is extended in the direction of the end part of the lever, by an inclined actuating bar (**43**).

9. The vehicle according to claims 7 or 8, **characterized in that** each lever (**31**) is equipped with a cut-off head (**63**), pivotably mounted on the lever and elastically returned in the direction of the front part of the body.

10. The vehicle according to one of claims 1 to 9, **characterized in that** the body (**3**) is equipped on its rear part (**9**) with flaps (**23**) for closing the forklift pockets (**18**).

11. An item of modular transport equipment, **characterized in that** it comprises:
- a vehicle (**1**) in accordance with one of claims 1 to 10,
- at least one removable spare body (**3**) capable of being mounted on the chassis (**2**) of the vehicle and having a front part (**8**) equipped at its middle, with an end stop (**52**) co-operating with the locking system (**33**) of the vehicle, a rear part (**9**) into which two forklift pockets (**18**) open, two side parts (**10**), a bottom (**7**) having two bearing surfaces (**7₁**) for forks (**15**) extending mutually parallel partly defining the two forklift pockets each equipped with a horizontal rod (**42**) cooperating with a locking lever (**31**), the spare removable body (**3**) and the removable body (**3**) with which the vehicle (**1**) is equipped being different models chosen from among a tank, an insulated or uninsulated van, a flatbed with or without drop sides, or a tipper flatbed,
- a handling device (**16**) with two forks (**15**), controlled to lift the removable body off the vehicle (**1**) and replace it by a spare removable body.
